# FASCICULE DE BREVET EUROPEEN

(11) **EP 0 604 889 B1**
(45) Date de publication et mention de la délivrance du brevet: **11.03.1998**
(21) Numéro de dépôt: 93120651.0
(22) Date de dépôt: 22.12.1993
(51) Int. Cl.: G01F 11/18, G01F 11/00

(54) **Dispositif doseur et procédé de dosage**
Dosierverfahren und -vorrichtung
Dosing device and procedure

(30) Priorité: 31.12.1992 FR 9216052
(43) Date de publication de la demande: 06.07.1994
(73) Titulaire: SEDEPRO, F-75015 Paris (FR)
(72) Inventeur: Deal, Michel, F-03110 St-Remy-en-Rollat (FR)
(74) Mandataire: Bauvir, Jacques

(56) Documents cités:
- EP-A- 0 465 981
- WO-A-90/07695
- FR-A- 2 118 159

## Description

La présente invention se rapporte au dosage quantitatif de matières diverses, plus particulièrement de produits en grains ou pulvérulents.

Le dosage de produits, en poids ou en volume, comporte d'innombrables applications en milieu industriel. Dans certains cas, il est hautement souhaitable que la mesure de poids ou de volume puisse se faire en continu.

On connaît déjà, par les demandes de brevet EP 0 465 981 et EP 0 465 980, des dispositifs mécaniques permettant d'assurer un dosage extrêmement précis de produits pulvérulents, avec une quantité unitaire dosée pouvant être très petite. La présente invention vise à proposer une alternative à ces dispositifs, qui permette une réalisation extrêmement compacte.

Un autre objectif de l'invention est de proposer un dispositif doseur volumétrique dont on puisse très facilement régler la quantité unitaire dosée sans agir sur la vitesse d'entraînement du dispositif doseur.

Ces buts sont atteints en utilisant un tiroir de dosage et un piston de refoulement, agencés comme expliqué ci-dessous. Selon l'invention, le dispositif doseur comporte :
- un tiroir de dosage ayant une surface propulsive ;
- une gorge dans laquelle le tiroir de dosage coulisse entre un point mort bas et un point mort haut ;
- des moyens permettant d'alimenter ladite gorge en matière à doser,
- une chambre de transfert en communication avec la gorge au point mort haut ;
- un piston de refoulement coulissant dans la chambre de tansfert parallèlement à la surface propulsive du tiroir de dosage, le piston de refoulement ayant un flanc dont la forme lui permet d'épouser la surface propulsive du tiroir de dosage ;
- un écran destiné à recouvrir ladite gorge ;
le volume élémentaire dosé étant défini dans ladite gorge lorsque le tiroir de dosage est au point mort bas, lorsque le piston de refoulement ferme ladite gorge et lorsque l'écran recouvre ladite gorge.

Afin d'éviter toute rupture de l'alimentation du dispositif doseur, celui-ci comporte de préférence un organe de gavage qui permet de remplir à refus le volume élémentaire dosé en forçant la matière à pénétrer dans celui-ci.

Les figures suivantes illustrent une application de l'invention au dosage de produits pulvérulents intervenant dans les industries de transformation du caoutchouc, notamment au dosage du soufre, du noir de carbone, ou d'autres charges renforçantes couramment utilisées et conditionnées en général sous forme de poudre.
La figure 1 montre le dispositif doseur de l'invention, suivant une coupe selon AA à la figure 2 ;
la figure 2 est une coupe selon BB à la figure 1 ;
la figure 3 est une coupe selon CC à la figure 1 ;
les figures 4 à 10 sont des schémas du dispositif doseur à différentes phases de son fonctionnement.

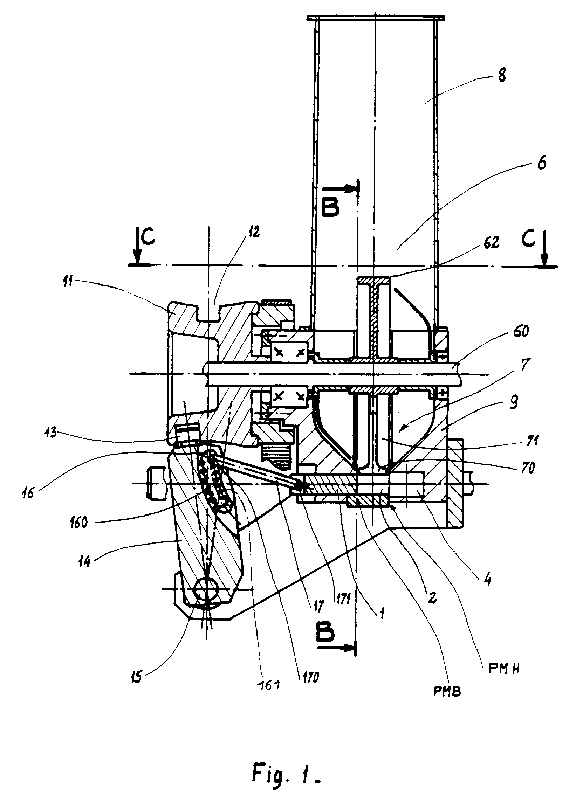

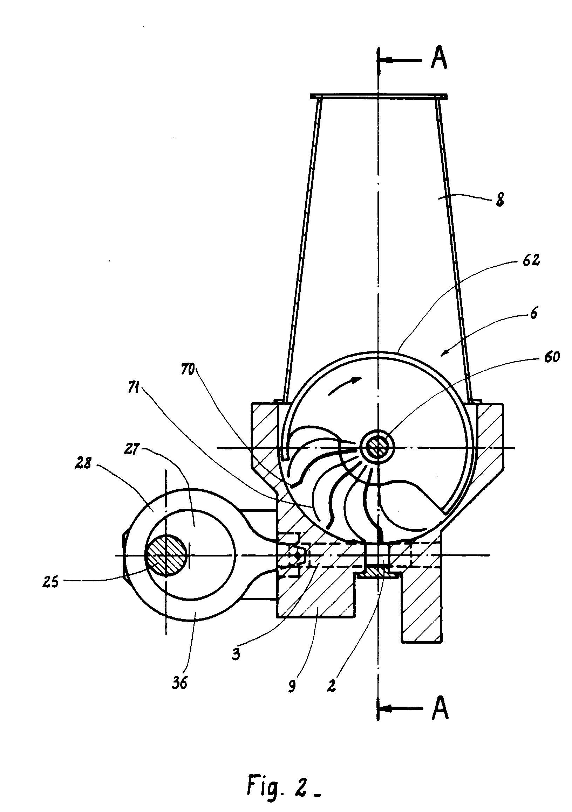

Aux figures 1 et 2, on aperçoit un carter 9 dans lequel est usinée une gorge 2 rectiligne. Celle-ci communique avec une chambre de transfert 4 réalisée par un perçage à l'intérieur du carter 9. La gorge 2 est délimitée par des parois 20 latérales et de fond de gorge. Elle constitue un chemin de guidage pour un tiroir de dosage 1. La gorge 2 est ouverte vers le haut et communique avec une trémie 8 montée par dessus le carter 9. La trémie 8 contient en vrac la matière à doser. La trémie 8 est ainsi disposée pour pouvoir alimenter en matière ladite gorge 2 par gravité. Le tiroir de dosage 1 coulisse dans la gorge 2 entre un point mort haut PMH et un point mort bas PMB.

La chambre de transfert 4 contient un piston de refoulement 3 qui coulisse à l'intérieur de celle-ci. Le piston de refoulement 3 est mobile entre le point A de sa course et le point B de sa course. L'orifice d'expulsion 40 de la chambre de transfert communique avec un réceptacle recevant la matière dosée, ou aboutit directement dans une chambre de mélangeage dans laquelle on incorpore en continu la matière dosée.

A l'intérieur de la trémie 8, on a disposé une roue 6 dont l'axe de rotation 60 est parallèle au mouvement de coulissement du tiroir de dosage 1 et que l'on voit bien en particulier à la figure 2. Cette roue comporte un écran 62 périphérique. L'écran 62 est réalisé par une portion de cylindre se développant approximativement sur un angle de 220°, dont le rôle apparaîtra dans la suite. Dans l'angle complémentaire, on aperçoit un ensemble de sabots rigides 70 et de lames flexibles 71 qui constituent un organe de gavage 7 forçant la matière à pénétrer à l'intérieur du volume élémentaire, ici en favorisant l'écoulement par gravité. Les lames flexibles 71 sont représentées sans déformation à la figure 2, où la flèche montre le sens de rotation de la roue 6. La roue 6 combine donc le rôle d'écran 62 et d'organe de brassage et de gavage du volune élémentaire.

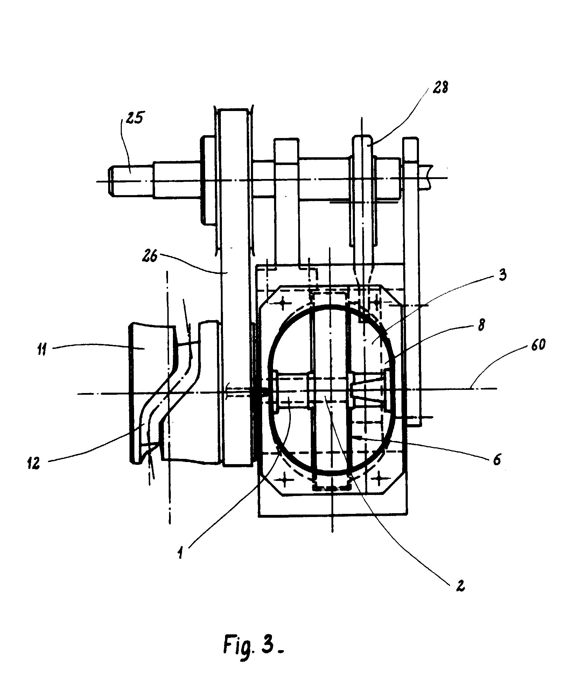

Un arbre d'entrée 25 entraîne en rotation l'axe de rotation 60 par l'intermédiaire d'une courroie crantée 26 (figure 3).

Une came 11 est montée sur l'axe de rotation 60 et est également entraînée par celui-ci. Cette came 11 comporte un chemin de guidage 12 usiné en creux sur sa périphérie. Un basculeur 14 (figure 1) est monté pivotant autour d'un tourillon 15 solidaire du carter 9. Un galet 13 est monté à l'extrémité du basculeur 14. Le galet 13 est en prise dans le chemin de guidage 12 tracé sur la came 11. Une bielle 17 actionnée par le basculeur 14 commande les mouvements du tiroir de dosage 1. Le déplacement du point d'articulation 170 de la bielle 17 le long du basculeur 14 permet de régler (manuellement, et dispositif doseur à l'arrêt) la course du tiroir de dosage 1, en rapprochant ou en éloignant le point d'articulation 170 du tourillon 15.

Le réglage du point d'articulation 170 de la bielle 17 s'effectue d'une manière qui permet de toujours conserver le même point mort haut. En effet, si on imagine que le tiroir de dosage 1 est à son point mort haut PMH, alors, en déplaçant le point d'articulation 170 de la bielle 17 sur un arc de cercle tracé sur le basculeur 14, et centré sur le pied 171 de la bielle 17, on n'affecte pas la position du point mort haut PMH. En revanche, on voit bien que l'on se rapproche ou l'on s'éloigne du tourillon 15, point de pivotement du basculeur 14. On réalise donc un réglage de la course en déplaçant la position du point mort bas PMB.

Afin de pouvoir régler finement la position du PMB, on réalise de préférence une pièce d'accouplement 16, en forme de haricot, qui peut coulisser quelque peu dans un logement légèrement plus grand réalisé sur le basculeur 14. Cette pièce d'accouplement 16 porte différents perçages 161 disposés en arc de cercle, comme expliqué ci-dessus. On accouple le point d'articulation 170 de la bielle 17 sur l'un d'eux.

En outre, la pièce d'accouplement 16 est immobilisée sur le basculeur en insérant un axe de blocage dans un perçage réalisé à cheval sur le bord de la pièce d'accouplement 16 et sur le basculeur 14. Ces perçages sont par exemple disposés en arc de cercle selon ce qui a été expliqué ci-dessus. Ces perçages prennent la forme de deux demi-perçages 160 : les demi-perçages réalisés sur le basculeur 14 et ceux réalisés sur la pièce d'accouplement 16. Ces derniers sont décalés entre eux d'une distance légèrement plus petite par rapport à ce qu'il en est pour les précédents. Une seule paire de demi-perçages 160 peut être amenée en coïncidence pour recevoir ledit axe de blocage, mais on peut choisir cette paire en faisant glisser la pièce d'accouplement 16 dans son logement sur le basculeur 14. L'amplitude du glissement correspond sensiblement à l'écart entre deux des perçages 161. A l'intérieur de ce débattement, on peut choisir entre autant de positions qu'il y a de paires de demi-perçages 160, ce qui permet le réglage fin de la position du point d'articulation 170 de la bielle 17 par rapport au tourillon 15.

Un excentrique 27 (figure 2) est monté sur l'arbre d'entrée 25. Il anime une bielle 28 qui commande le piston de refoulement 3. Il est également possible de disposer en vis-à-vis deux tiroirs de dosage indépendants, coulissant chacun dans leur gorge, pour refouler dans la même chambre de trasfert, par exemple deux produits différents qui sont refoulés par le même piston de refoulement 3.

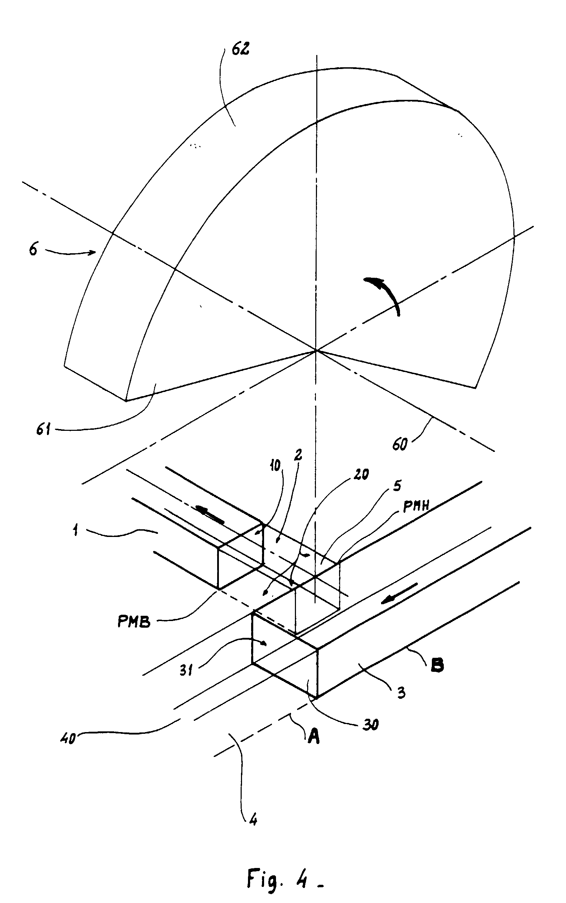

Les figures 4 à 10 sont des représentations schématiques, simplifiées, établies en perpective, pour bien faire comprendre les mouvements des principaux organes du dispositifs doseur.

Le volume élémentaire à doser est établi lorsque le tiroir de dosage 1 est reculé au niveau de son PMB. C'est la configuration schématisée par la figure 4. Le volume élémentaire à doser est ainsi matéralisé par une cavité 5 située dans le fond de la trémie 8. Cette cavité 5 est délimitée par les parois 20 de la gorge 2, par la surface propulsive 10 du tiroir de dosage 1, et par le flanc 31 du piston de refoulement 3.

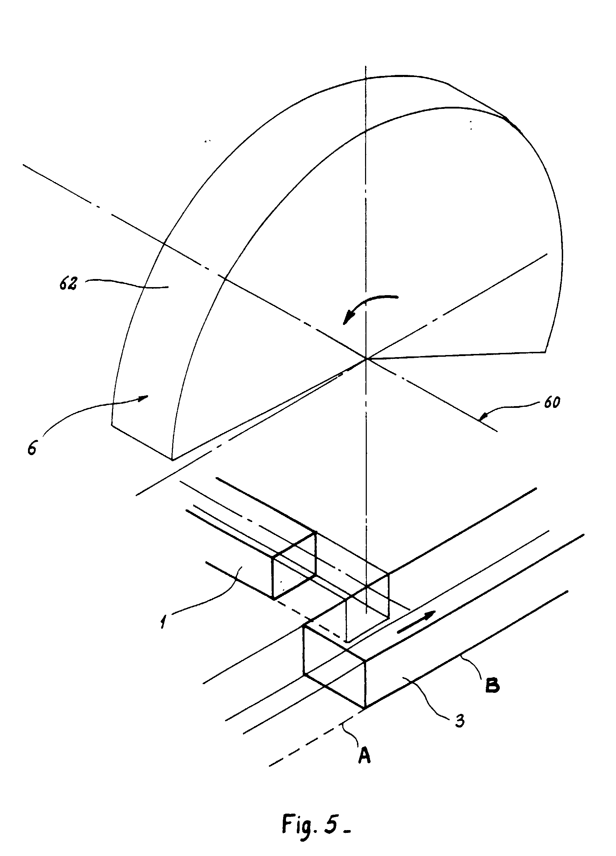

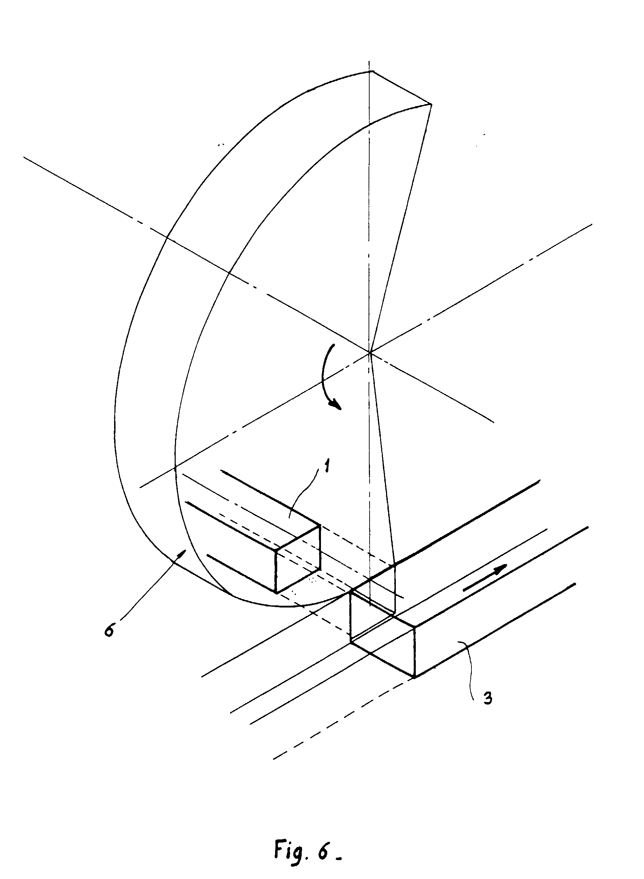

Le fonctionnement du dispositif doseur est le suivant. La figure 4 schématise la phase d'admission de la matière à l'intérieur du volume élémentaire. La rotation de la roue 6 permet aux lames flexibles 71 et aux sabots 70 de défiler par dessus la gorge 2 dans laquelle se trouve délimitée la cavité 5. La forme des lames flexibles 71 permet un déplacement positif de la matière pour la forcer à pénétrer à l'intérieur de la cavité 2. Progressivement, celle-ci se remplit de matière, et les lames flexibles 71 prennent une attitude plus recourbée. A la figure 5, on voit que le piston de refoulement 3 a débuté son mouvement de recul vers son point mort bas. Le tiroir de dosage 1 est toujours immobile. La figure 6 représente la fin de la phase d'admission. Pour définir complètement le volume élémentaire, l'écran 62 masque l'ouverture se trouvant par dessus la gorge 2.

Le volume élémentaire de dosage se trouve ainsi complètement isolé de la trémie 8 et également de l'orifice d'expulsion 40, puisque le piston de refoulement 3, tout en continuant son mouvement de recul vers le PMB, n'a pas encore découvert la communication entre la gorge 2 et la chambre de transfert 4.

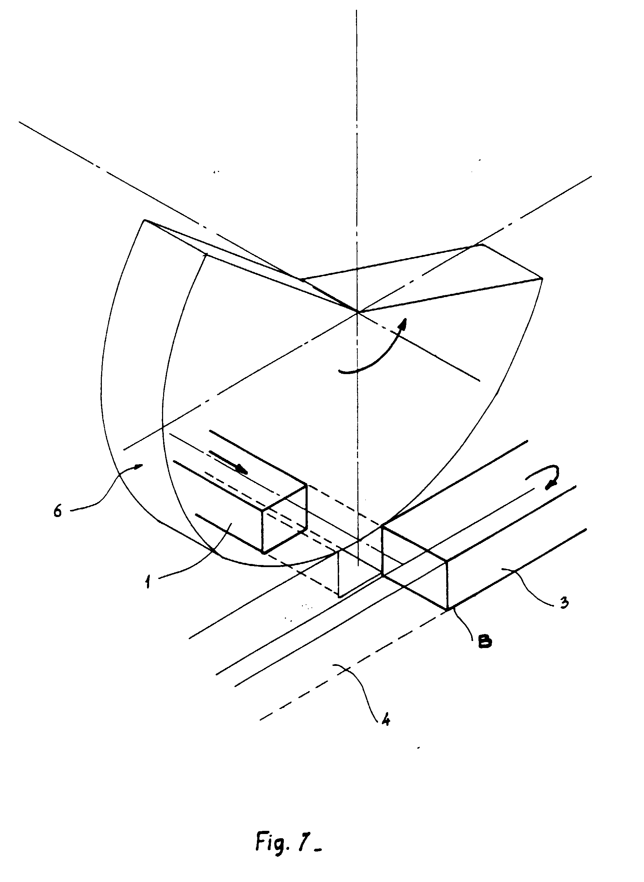

A la figure 7, le piston de refoulement 3 a atteint son point mort bas en B. La roue 6 continue à tourner. Etant donné la taille de l'écran 62, l'orifice d'introduction de la matière à l'intérieur de la gorge 2 continue à être séparé et isolé de la trémie 8. Le tiroir de dosage 1 débute son mouvement depuis le PMB jusqu'au point PMH pour expulser la matière hors du volume élémentaire de dosage. L'essentiel est que l'étanchéité du volume élémentaire apparaissant à la figure 6 soit assurée. Selon la compressibilité de la matière dosée, le tiroir de dosage 1 peut débuter son mouvement vers son PMH un peu avant que la communication entre gorge 2 et chambre de transfert 4 ne soit établie.

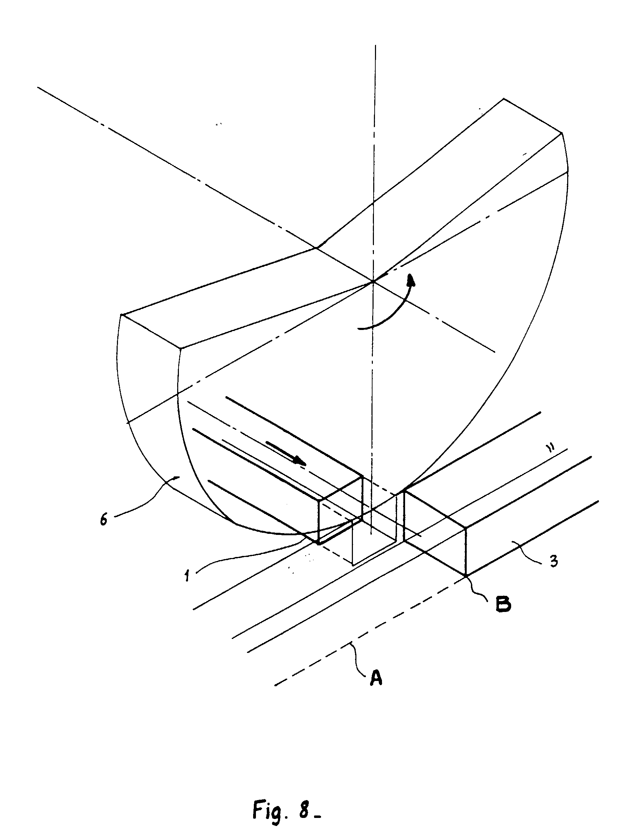

A la figure 8, on voit que la matière dosée passe progressivement dans la chambre de transfert 4.

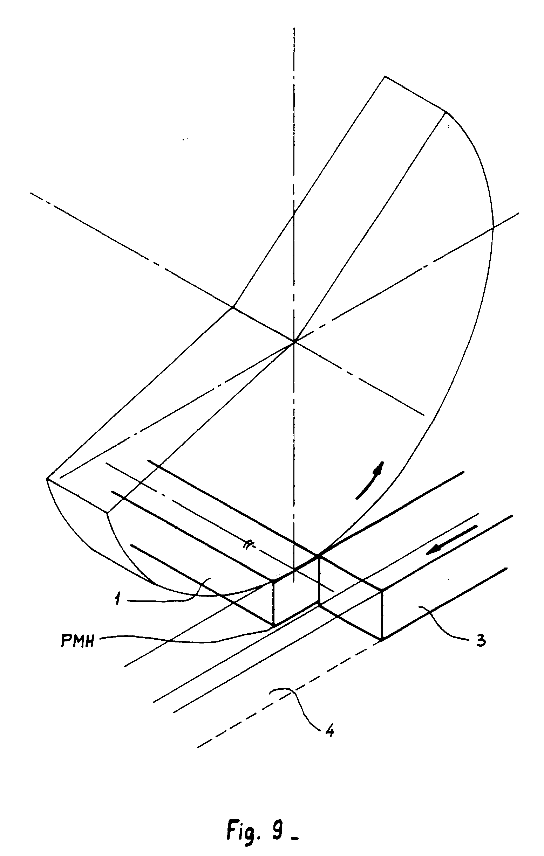

A la figure 9, le tiroir de dosage a atteint son PMH. La matière dosée est ainsi passée en totalité dans la chambre de transfert 4.

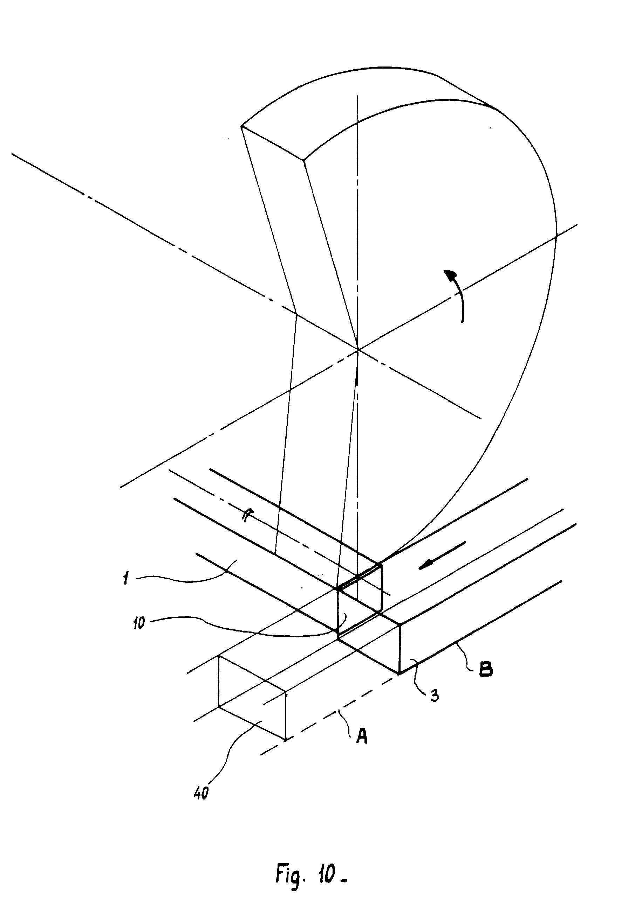

A la figure 10, on voit que le piston de refoulement 3 se déplace du point B pour rejoindre le point A. Il assure ainsi l'expulsion de la matière dosée de façon positive au travers de l'orifice d'expulsion 40. Grâce à l'utilisation d'un piston de refoulement 3, la matière dosée peut être refoulée, même face à une contre pression très élevée. On voit que, par son mouvement, le piston de refoulement 3 racle la surface propulsive 10 du tiroir de dosage 1 et assure ainsi qu'il ne subsiste pas de matière à l'intérieur de la gorge 2.

L'écran 62 est dimensionné pour occulter la gorge 2 au moins jusqu'au moment où le flanc 31 du piston de refoulement 3 recouvre complètement la surface propulsive 10 du tiroir de dosage 1. De cette façon, il n'y a jamais de communication directe entre l'intérieur de la trémie 8, où se trouve stockée en vrac la matière à doser, et la chambre de transfert 4. La parfaite volumétrie du dispositif doseur est ainsi garantie.

L'écran 62 du dispositif décrit est constitué par un morceau de cylindre. Bien entendu, le flanc du tiroir de dosage 1 a une forme exactement complémentaire. La section de la gorge 2 est identique à la section de la surface propulsive du tiroir de dosage. Cette surface ressemble à un rectangle, sauf que l'un des côtés est remplacé par un arc de cercle. Il va de soi que l'homme du métier pourrait imaginer des variantes constructives sans sortir de la présente invention. Notamment, la gorge pourrait être moins haute que la surface propulsive du tiroir de dosage. Il suffit d'assurer un guidage du tiroir de dosage, et, en fin de phase d'admission, de refermer le volume élémentaire pour matérialiser la cylindrée unitaire du dispositif de dosage.

Le dispositif doseur revient ensuite en phase d'admission : l'écran 62 dégage le dessus de la gorge 2 et le tiroir de dosage 1 recule vers son PMB. L'ordre de ces mouvements n'a bien sûr aucune importance.

L'invention propose ainsi un procédé pour doser volumétriquement un produit en poudre ou en grain consistant à utiliser :
- un tiroir de dosage coulissant dans une gorge entre un point mort haut et un point mort bas,
- un piston de refoulement coulissant dans une chambre de transfert en communication avec ladite gorge au point mort haut,
- et un écran,
et à établir un cycle de fonctionnement comme suit :
- définir partiellement un volume élémentaire en ayant reculé le tiroir de dosage au point mort bas choisi, en laissant le piston de refoulement occulter la communication entre la gorge et la chambre de transfert,
- maintenir la gorge ouverte pendant le temps nécesaire pour que le produit introduit dans la gorge remplisse totalement le volume élémentaire,
- isoler ledit volume élémentaire en recouvrant ladite gorge par l'écran,
- faire reculer le piston de refoulement pour qu'il découvre la gorge,
- faire avancer le tiroir de dosage jusqu'à son point mort haut, pour transférer le produit hors du volume élémentaire,
- puis, tout en maintenant immobile le tiroir de dosage, faire racler la surface propulsive du tiroir de dosage par le piston de refoulement en avançant celui-ci jusqu'à ce qu'il occulte la communication entre la gorge et la chambre de transfert, pour expulser ledit volume élémentaire,
et à répéter le cycle de fonctionnement pour expulser autant de volumes élémentaires de produit que souhaité.

Comme déjà expliqué, ce procédé permet en ajustant la position du point mort bas de faire varier le volume élémentaire. D'une façon générale, il est avantageux d'utiliser un moyen d'agitation disposé dans la trémie, pour favoriser l'écoulement de produit dans le volume élémentaire.

En consultant à présent plus particulièrement la figure 3, on comprend que le chemin 12 de la came 11 est tracé de façon appropriée pour obtenir les mouvements de va-et-vient et les pauses qui viennent d'être décrits. Bien qu'il soit possible de régler le débit dosé par le dispositif en agissant sur la vitesse d'entraînement du dispositif, on peut préférer dans de nombreuses applications faire varier le débit en agissant sur la cylindrée unitaire du dispositif doseur comme expliqué ci-dessus, en faisant varier la position PMB du tiroir de dosage. Même en cas de réglage de la course, l'immobilité de la position du PMH garantit que le volume élémentaire dosé se vide à chaque cycle du dispositif.

Ceci permet d'insérer le dispositif dans une machine plus complexe, comportant par exemple plusieurs dispositifs doseurs, comme un mélangeur en continu préparant du caoutchouc. C'est ainsi que l'invention s'étend aussi à un procédé pour préparer un mélange de caoutchouc cru, caractérisé en ce que l'on expulse le produit dosé directement dans un mélangeur.

## Revendications

1. Dispositif doseur comportant :
- un tiroir de dosage (1) ayant une surface propulsive (10),
- une gorge (2) dans laquelle le tiroir de dosage (1) coulisse entre un point mort bas (PMB) et un point mort haut (PMH),
- des moyens permettant d'alimenter ladite gorge (2) en matière à doser,
- une chambre de transfert (4) en communication avec la gorge (2) au point mort haut (PMH),
- un piston de refoulement (3) coulissant dans la chambre de tansfert (4) parallèlement à la surface propulsive (10) du tiroir de dosage (1), le piston de refoulement ayant un flanc (31) dont la forme lui permettant d'épouser la surface propulsive (10) du tiroir de dosage (1),
- un écran (62) destiné à recouvrir ladite gorge (2),
le volume élémentaire dosé étant défini dans ladite gorge (2) lorsque le tiroir de dosage (1) est au point mort bas (PMB), lorsque le piston de refoulement (3) ferme ladite gorge (2) et lorsque l'écran (62) recouvre ladite gorge (2).

2. Dispositif selon la revendication 1, caractérisé en ce que la position du point mort bas (PMB) le long de la gorge (2) est réglable.

3. Dispositif selon la revendication 2, caractérisé en ce que le tiroir de dosage (1) est commandé par une bielle (17) actionnée par un basculeur (14), et en ce que le point d'articulation (170) de la bielle (17) peut être monté sur un basculeur (14) en différentes positions réparties en arc de cercle, arc tracé sur le basculeur (14) lorsque le tiroir de dosage (1) est au point mort haut (PMH), et centré sur le pied (171) de la bielle (17).

4. Dispositif selon l'une des revendications 1 à 3, caractérisé en ce que la section de la gorge (2) correspond à la section du tiroir de dosage (1).

5. Dispositif selon l'une des revendications 1 à 4, caractérisé en ce qu'il comprend un organe de gavage (7) forçant la matière à pénétrer dans le volume élémentaire.

6. Dispositif selon l'une des revendications 1 à 5, caractérisé en ce qu'il comporte une trémie (8) destinée à contenir la matière à doser, disposée pour alimenter ladite gorge (2) par gravité.

7. Dispositif selon la revendication 5 et 6, caractérisé en ce qu'il comporte une roue (6) disposée dans ladite trémie (8), comportant des lames flexibles (71) et des sabots (70) constituant l'organe de gavage (7).

8. Dispositif selon la revendication 7, caractérisé en ce que la roue (6) comporte une portion cylindrique constituant ledit écran (62).

9. Procédé pour doser volumétriquement un produit en poudre ou en grain, consistant à utiliser
- un tiroir de dosage coulissant dans une gorge entre un point mort haut et un point mort bas,
- un piston de refoulement coulissant dans une chambre de transfert en communication avec ladite gorge au point mort haut,
- un écran capable de recouvrir ladite gorge,
et à établir un cycle de fonctionnement comme suit :
- définir partiellement un volume élémentaire en ayant reculé le tiroir de dosage au point mort bas choisi, en laissant le piston de refoulement occulter la communication entre la gorge et la chambre de transfert,
- maintenir la gorge ouverte pendant le temps nécesaire pour que le produit introduit dans la gorge remplisse totalement le volume élémentaire,
- isoler ledit volume élémentaire en recouvrant ladite gorge par ledit écran,
- faire reculer le piston de refoulement pour qu'il découvre la gorge,
- faire avancer le tiroir de dosage jusqu'à son point mort haut, pour transférer le produit hors du volume élémentaire,
- puis, tout en maintenant immobile le tiroir de dosage, faire racler la surface propulsive du tiroir de dosage par le piston de refoulement en avançant celui-ci jusqu'à ce qu'il occulte la communication entre la gorge et la chambre de transfert, pour expulser ledit volume élémentaire,
et à répéter le cycle de fonctionnement pour expulser autant de volumes élémentaires de produit que souhaité.

10. Procédé selon la revendication 9, caractérisé en ce que l'on ajuste la position du point mort bas pour faire varier le volume élémentaire.

11. Procédé selon l'une des revendication 9 ou 10, utilisé pour préparer un mélange de caoutchouc cru, caractérisé en ce que l'on expulse le produit dosé directement dans un mélangeur.

## Patentansprüche

1. Dosiervorrichtung mit den folgenden Merkmalen:
- einen Dosierschieber (1) mit einer schiebenden Oberfläche (10),
- eine Nut (2), in welcher der Dosierschieber (1) zwischen einem unteren Totpunkt (PMB) und einem oberen Totpunkt (PMH) gleitet,
- Mittel, die es gestatten, die genannte Nut (2) mit zu dosierendem Material zu speisen,
- eine Überführungskammer (4), die am oberen Totpunkt (PMH) mit der Nut (2) in Verbindung steht,
- einen Verdrängungskolben (3), der in der Überführungskammer (4) parallel zur schiebenden Oberfläche (10) des Dosierschiebers (1) gleitet, wobei der Verdrängungskolben eine Flanke (31) aufweist, deren Form es ihm gestattet, sich an die schiebende Oberfläche (10) des Dosierschiebers (1) anzuschmiegen, und
- eine Abdeckscheibe (62), die dazu bestimmt ist, die genannte Nut (2) abzudecken,
wobei das dosierte Elementarvolumen in der genannten Nut (2) festgelegt wird, wenn der Dosierschieber (1) sich am unteren Totpunkt (PMB) befindet, wenn der Verdrängungskolben (3) die genannte Nut (2) verschließt und wenn die Abdeckscheibe (62) die genannte Nut (2) abdeckt.

2. Vorrichtung nach Anspruch 1, dadurch gekennzeichnet, daß die Lage des unteren Totpunkts (PMB) längs der Nut (2) einstellbar ist.

3. Vorrichtung nach Anspruch 2, dadurch gekennzeichnet, daß der Dosierschieber (1) von einer Koppelstange (17) gesteuert wird, die von einer Kippanordnung (14) betätigt wird, und daß der Anlenkpunkt (170) der Koppelstange (17) auf einer Kippanordnung (14) an verschiedenen Stellen angebracht sein kann, die über einen Kreisbogen verteilt sind, wobei der Kreisbogen auf der Kippanordnung (14) aufgetragen wird, wenn der Dosierschieber (1) sich im oberen Totpunkt (PMH) befindet, und auf den Fuß (171) der Koppelstange (17) zentriert ist.

4. Vorrichtung nach einem der Ansprüche 1 bis 3, dadurch gekennzeichnet, daß der Querschnitt der Nut (2) dem Querschnitt des Dosierschiebers (1) entspricht.

5. Vorrichtung nach einem der Ansprüche 1 bis 4, dadurch gekennzeichnet, daß sie ein Aufladeorgan (7) aufweist, das den Stoff zwangsweise in das Elementarvolumen eindringen läßt.

6. Vorrichtung nach einem der Ansprüche 1 bis 5, dadurch gekennzeichnet, daß sie einen Trichter (8) aufweist, der dazu bestimmt ist, den zu dosierenden Stoff aufzunehmen, und so angeordnet ist, daß er die genannte Nut (2) durch Schwerkraftwirkung speist.

7. Vorrichtung nach Anspruch 5 und 6, dadurch gekennzeichnet, daß sie ein Rad (6) aufweist, das im genannten Trichter (8) angeordnet ist und flexible Lamellen (71) und Schleifschuhe (70) aufweist, die das Aufladeorgan (7) bilden.

8. Vorrichtung nach Anspruch 7, dadurch gekennzeichnet, daß das Rad (6) einen zylindrischen Abschnitt aufweist, der die genannte Abdeckscheibe (62) bildet.

9. Verfahren zum volumetrischen Dosieren eines pulverförmigen oder körnigen Produkts, das darin besteht, daß man
- einen Dosierschieber, der in eine Nut zwischen einem oberen Totpunkt und einem unteren Totpunkt gleitet,
- einen Verdrängungskolben, der in eine Übertragungskammer gleitet, die mit der genannten Nut am oberen Totpunkt in Verbindung steht, und
- eine Abdeckscheibe benutzt, die imstande ist, die genannte Nut abzudecken,
und daß man den folgenden Funktionszyklus herstellt:
- partielles Festlegen eines Elementarvolumens, indem man den Dosierschieber bis zum gewählten unteren Totpunkt zurückgleiten läßt und den Verdrängungskolben die Verbindung zwischen der Nut und der Überführungskammer verschließen läßt,
- Geschlossenhalten der Nut während der Zeit, die erforderlich ist, damit das Produkt, das in die Nut eingeführt wird, vollständig das Elementarvolumen ausfüllt,
- Isolieren des genannten Elementarvolumens, indem man die genannte Nut durch die genannte Abdeckscheibe abdeckt,
- Zurückfahrenlassen des Verdrängungskolbens, damit er die Nut freilegt,
- Vorfahrenlassen des Dosierschiebers bis zu seinem oberen Totpunkt, um das Produkt aus dem Elementarvolumen zu überführen, und
- dann, während man den Dosierschieber völlig unbeweglich hält, Abschaben der schiebenden Oberfläche des Dosierschiebers durch den Verdrängungskolben, indem man diesen vorfahren läßt, bis er die Verbindung zwischen der Nut und der Überführungskammer verschließt, und das genannte Elementarvolumen ausstößt,
und Wiederholen des Funktionszyklus, um soviele Elementarvolumina des Produktes auszustoßen, wie es gewünscht ist.

10. Verfahren nach Anspruch 9, dadurch gekennzeichnet, daß man die Lage des unteren Totpunktes einstellt, um zu veranlassen, daß sich das Elementarvolumen verändert.

11. Verfahren nach einem der Ansprüche 9 oder 10, das benutzt wird, um eine Rohgummimischung vorzubereiten, dadurch gekennzeichnet, daß man das dosierte Produkt unmittelbar in einen Mischer hinein ausstößt.

## Claims

1. A metering device comprising:
- a metering slide (1) having a propulsion surface (10),
- a groove (2) in which the metering slide (1) slides between a bottom dead centre (PMB) and a top dead centre (PMH),
- means which make it possible to feed said groove (2) with material to be metered,
- a transfer chamber (4) in communication with the groove (2) at the top dead centre (PMH),
- a delivery piston (3) sliding in the transfer chamber (4) parallel to the propulsion surface (10) of the metering slide (1), the delivery piston having a side wall (31) the shape of which enables it closely to fit the propulsion surface (10) of the metering slide (1),
- a screen (62) for covering said groove (2),
the metered unit volume being defined in said groove (2) when the metering slide (1) is at its bottom dead centre (PMB), when the delivery piston (3) closes said groove (2), and when the screen (62) covers said groove (2).

2. A device according to Claim 1, characterised in that the position of the bottom dead centre (PMB) along the groove (2) is adjustable.

3. A device according to Claim 2, characterised in that the metering slide (1) is driven by a connecting rod (17) actuated by a rocker (14), and in that the point of articulation (170) of the connecting rod (17) can be mounted on a rocker (14) in different positions distributed over a circular arc, the arc being traced on the rocker (14) when the metering slide (1) is at its top dead centre (PMH) and is centred on the foot (171) of the connecting rod (17).

4. A device according to one of Claims 1 to 3, characterised in that the cross-section of the groove (2) corresponds to the cross-section of the metering slide (1).

5. A device according to one of Claims 1 to 4, characterised in that it comprises a filling member (7) which forces the material to penetrate into the unit volume.

6. A device according to one of Claims 1 to 5, characterised in that it comprises a hopper (8) for containing the material to be metered, the hopper being arranged so as to feed said groove (2) by gravity.

7. A device according to Claims 5 and 6, characterised in that it comprises a wheel (6) arranged in said hopper (8) and having flexible blades (71) and shoes (70) constituting the filling member (7).

8. A device according to Claim 7, characterised in that the wheel (6) has a cylindrical portion constituting said screen (62).

9. A method of volumetrically metering a powdered or granulated product, which consists in using
- a metering slide sliding within a groove between a top dead centre and a bottom dead centre,
- a delivery piston sliding within a transfer chamber in communication with said groove at the top dead centre, and
- a screen capable of covering said groove,
and in establishing an operating cycle as follows:
- partially defining a unit volume by having moved back the metering slide to the bottom dead centre position selected, allowing the delivery piston to shut off communication between the groove and the transfer chamber,
- maintaining the groove open for the time necessary for the product introduced into the groove to completely fill the unit volume,
- isolating said unit volume by covering said groove by said screen,
- causing the delivery piston to move back so that it uncovers the groove,
- advancing the metering slide up to its top dead centre in order to transfer the product out of the unit volume,
- thereupon, while keeping the metering slide stationary, causing the propulsion surface of the metering slide to be scraped by the delivery piston by advancing the latter until it shuts off the communication between the groove and the transfer chamber in order to expel said unit volume,
and repeating the operating cycle in order to expel as many unit volumes of product as desired.

10. A method according to Claim 9, characterised in that the position of the bottom dead centre is adjusted in order to vary the unit volume.

11. A method according to one of Claims 9 or 10, used to prepare a raw rubber mix, characterised in that the product metered is expelled directly into a mixer.
